# EUROPÄISCHE PATENTANMELDUNG

(11) **EP 1 916 144 A2**
(43) Veröffentlichungstag der Anmeldung: **30.04.2008**
(21) Anmeldenummer: 07021049.7
(22) Anmeldetag: 26.10.2007
(51) Int. Cl.: B60K 15/067

(54) **Verfahren und Vorrichtung zur Behältermontage**

(30) Priorität: 27.10.2006 DE 102006051389
(71) Anmelder: Elkamet Kunststofftechnik GmbH, 35216 Biedenkopf (DE)
(72) Erfinder: Parsch, Michael, 34274 Kirchhain (DE); Simon, Günter, 35232 Dautphetal (DE); Bier, Volker, 35112 Fronhausen (DE)
(74) Vertreter: Buchhold, Jürgen

(57) **Zusammenfassung**

Die Erfindung betrifft eine Montagevorrichtung (1) und ein Verfahren zur sicheren Montage von Behältern (3) mit selbsttragender Struktur (4), insbesondere von Kunststoffbehältern (3) für flüssige Medien und Chemikalien wie Flüssigbrennstoffe, zur Anbindung an stationäre oder mobile Halteeinrichtungen (2). Das Verfahren umfasst die Schritte: Anbringen von Leitungen an einer Halteeinrichtung (2), Anordnen des Behälters (3) an der Halteeinrichtung (2) und Anbinden des Behälters (3) an die Leitungen, wobei der Schritt Anordnen des Behälters (3) an der Halteeinrichtung (2) das Anbringen von je einem Verbindungsmittel (8) an der Halteeinrichtung (2) und an dem Behälter (3) sowie ein Zusammenbringen der Verbindungsmittel (8) umfasst. Das Anbringen des Verbindungsmittels (8) an der Halteeinrichtung (2) wird bevorzugt vor dem Schritt Anbringen von Leitungen ausgeführt. Die Montagevorrichtung (1) weist Mittel zur Durchführung des Verfahrens auf.

## Beschreibung

Die Erfindung betrifft ein Verfahren und eine Montagevorrichtung zur sicheren Montage von Kunststoffbehältern gemäß dem Oberbegriff von Anspruch 1 bzw. gemäß dem Oberbegriff von Anspruch 9.

Verfahren und Vorrichtungen zur Montage von Kunststoffbehältern an Halteeinrichtungen sind allgemein bekannt. Dabei werden Kunststoffbehälter, insbesondere Kunststoffbehälter für Flüssigkeiten und Chemikalien, über eine Konsole, die an der Halteeinrichtung angeordnet ist, an der Halteeinrichtung angeordnet. Die Konsole ist dabei vor einem Anordnen des Kunststoffbehälters an der Halteeinrichtung montiert. Ebenfalls vor dem Anordnen des Kunststoffbehälters werden Leitungen und Kabel zum Anschluss oder zur Verbindung des Kunststoffbehälters mit den Leitungen oder Kabeln an der Halteeinrichtung installiert. Gegebenenfalls folgen noch weitere Montageschritte oder Bearbeitungsschritte wie Lackieren und dergleichen, bevor der Kunststoffbehälter an der Konsole der Halteeinrichtung angeordnet wird. Ist der Kunststoffbehälter an der Konsole angeordnet, wird dieser zur sicheren Montage mit Fixierelementen wie Spannbändern und dergleichen festgelegt.

Insbesondere wird das Verfahren bzw. eine entsprechende Montagevorrichtung (Spannbänder, Konsole) zur Befestigung von Kunststoffbehältern wie Kraftstofftanks an Halteeinrichtungen bei der Montage an Lkws verwendet. Die Halteeinrichtung ist dabei zum Beispiel als C-Rahmen des Lkws ausgebildet. Die Konsole wird zuerst an dem C-Rahmen befestigt und die Verlegung der Leitungen und Kabel erfolgt in dem C-Rahmen, bevor die eigentliche Tankmontage durchgeführt wird.

Nachteil an der bekannten Lösung ist, dass die Festlegung des Tanks über Spannbänder erfolgt, die eine Vorspannung benötigen und bei denen die Montageanzugsmomente genau eingehalten werden müssen, um eine Montage zu bewirken. Dabei ist diese Art der Montage sehr aufwendig und komplex. Zudem müssen die Konsolen vor der Verlegung der Leitungen oder Kabel befestigt werden, so dass die nachfolgenden Verfahrensschritte und weitere Bearbeitungsschritte durch die bereits montierten Konsolen beeinträchtigt werden. Zudem stellen diese sperrigen Konsolen eine Verletzungsgefahr dar. Nicht zuletzt ist die Art der Sicherung bei zum Beispiel glattwandigen Tanks nur unzureichend ausgebildet. Insbesondere bei Vollbremsungen, Unfällen und dergleichen besteht bei gefülltem Tank die Gefahr, dass der Tank sich bewegt (wandert).

Es ist deshalb eine Aufgabe der vorliegenden Erfindung, ein Verfahren zur Montage und eine Montagevorrichtung zu schaffen, welche die vorstehenden Nachteile überwindet. Insbesondere ist es eine Aufgabe der Erfindung, ein Verfahren zur Montage und eine Montagevorrichtung zu schaffen, die eine sichere und einfach und wenig komplex durchführbare Montage eines Kunststoffbehälters an einer Halteeinrichtung ermöglicht.

Diese Aufgabe wird durch ein Verfahren gemäß dem Oberbegriff des Anspruchs 1 und eine Montagevorrichtung gemäß dem Oberbegriff des Anspruchs 9 gelöst.

Hauptmerkmale der Erfindung sind im kennzeichnenden Teil von Anspruch 1 und im kennzeichnenden Teil von Anspruch 9 angegeben. Ausgestaltungen sind Gegenstand der Ansprüche 2 bis 8 und 10 bis 17.

Die Erfindung schließt die technische Lehre ein, dass bei einem Verfahren zur sicheren Montage von Kunststoffbehältern mit selbsttragender Struktur, insbesondere von Kunststoffbehältern für flüssige Medien und Chemikalien wie Flüssigbrennstoffe, zur (Leitungs)Anbindung an stationäre oder mobile Halteeinrichtungen, folgende Schritte umfasst sind: Anbringen von Leitungen an der Halteeinrichtung, Anordnen des Kunststoffbehälters an der Halteeinrichtung und Anschließen des Kunststoffbehälters an die Leitungen, wobei der Schritt Anordnen des Kunststoffbehälters an der Halteeinrichtung das Anbringen von je einem Verbindungsmittel an der Halteeinrichtung und an dem Kunststoffbehälter sowie ein Zusammenbringen der Verbindungsmittel umfasst, wobei das Anbringen des Verbindungsmittels an der Halteeinrichtung bevorzugt vor dem Schritt Anbringen von Leitungen ausgeführt wird.

Der Ausdruck "sichere Montage" stellt klar, dass eine ungewollte Bewegung des Kunststoffbehälters relativ zu der Halteeinrichtung verhindert ist. Dies schließt eine "crashsichere" Montage ein. "Crashsicher" bedeutet hierbei, dass wenn der Kunststoffbehälter an einer mobilen Halteeinrichtung, z.B. an einem Rahmen eines Kraftfahrzeugs wie einem PKW oder LKW befestigt ist, der Kunststoffbehälter auch bei einem Unfall (Crash) an der Halteeinrichtung montiert bleibt und sich nicht löst. Insgesamt erfüllt eine "sichere Montage" zum Beispiel die Anforderungen von Crash-Tests wie beispielsweise dem Crash-Test Euro NCAP.

Kunststoffbehälter mit tragender Struktur sind solche, bei denen die zur Stabilität erforderliche Tragstruktur in den Kunststoffbehälter integriert ist. Dies kann beispielsweise durch Materialverstärkungen oder zusätzliche, in den Kunststoffbehälter eingebettete Profile realisiert sein. Bevorzugt sind die Materialverstärkungen aus dem gleichen oder einem ähnlichen Material wie der Kunststoffbehälter hergestellt. Der Kunststoffbehälter mit der tragenden Struktur kann jedoch auch in Verbundbauweise oder Hybridbauweise realisiert sein, bei der tragende Strukturelemente wie Profile aus einem anderen Material als das Material, aus dem der Kunststoffbehälter hergestellt ist, in den Kunststoffbehälter integriert oder eingebettet sind.

Diese Kunststoffbehälter sollen an Halteeinrichtungen montiert werden, die mobil oder auch stationär ausgebildet sein können. Bevorzugt kommt eine mobile Halteeinrichtung in Betracht, etwa der C-Rahmen eines Lkws. Der Kunststoffbehälter wird zunächst an der Halteeinrichtung angebracht und dann an ein Leitungs- oder ein Kabelsystem angeschlossen. Über eine Leitungsanbindung wird der Innenraum des Kunststoffbehälters mit einer Leitung oder mehreren Leitungen verbunden. Die Leitungen sind zuvor an der Halteeinrichtung angeordnet worden, so dass diese nur noch mit dem montierten Kunststoffbehälter zu verbinden sind.

Der Kunststoffbehälter wird dadurch an der Halteeinrichtung angeordnet, dass sowohl an der Halteeinrichtung als auch an dem Kunststoffbehälter je ein Verbindungsmittel angebracht wird und die Verbindungsmittel dann miteinander in Wirkverbindung gebracht werden. Anders als beim Umspannen mit einem Spanngurt weisen die zu verbindenden Teile - Halteeinrichtung und Kunststoffbehälter - vor dem Verbinden entsprechende Verbindungsmittel auf, über welche diese einfach miteinander verbindbar sind. Das Anbringen des Verbindungsmittels an der Halteeinrichtung kann vor dem Anbringen der Leitungen erfolgen. Die Verbindungsmittel sind entsprechend klein bemessen, so dass diese nicht die weiteren Montageschritte oder weitere Bearbeitungsschritte beeinträchtigen. Zudem ist insbesondere das Verbindungsmittel, welches an der Halteeinrichtung montiert wird, so ausgebildet, dass Verletzungen verhindert werden. Dies kann zum Beispiel neben kleineren Abmessungen durch Abrundungen und/oder wenig hervorragende Teile bewirkt werden.

Zwischen dem Schritt Anbringen des Verbindungsmittels an der Halteeinrichtung und dem Schritt Zusammenbringen der Verbindungsmittel können weitere Montageschritte ausgeführt werden. Diese weiteren Montageschritte werden aufgrund der Ausbildung des an der Halteeinrichtung angeordneten Verbindungsmittels und der nicht mehr an der Halteeinrichtung angeordneten tragenden Struktur, z.B. in Form von relativ groß bauenden Konsolen, nicht beeinträchtigt und die Verletzungsgefahr ist daher reduziert.

Eine Ausführungsform sieht vor, dass das Anbringen von Verbindungsmitteln das Anbringen von im Wesentlichen formschlüssig zusammenwirkenden Verbindungsmitteln umfasst. Auf diese Weise lässt sich eine einfache Verbindung der Verbindungsmittel an der Halteeinrichtung und dem Kunststoffbehälter bewirken. Es sind jedoch auch andere Verbindungen wie kraft-, reib- oder stoffschlüssige Verbindungen möglich, auch in beliebigen Kombinationen. Im Gegensatz etwa zu stoffschlüssig zusammenwirkenden Verbindungsmitteln lassen sich formschlüssig zusammenwirkende Verbindungsmittel bei Bedarf leicht voneinander lösen, ohne dass die sichere Montage beeinflusst ist. Die formschlüssig zusammenwirkenden Verbindungsmittel weisen insbesondere formschlüssig ineinander eingreifende Teile oder Abschnitte auf, über welche eine formschlüssige Verbindung realisierbar ist.

In einem weiteren Ausführungsbeispiel ist vorgesehen, dass das Anbringen von im Wesentlichen formschlüssig zusammenwirkenden Verbindungsmitteln das Anbringen von mindestens einer Rastaufnahmeeinrichtung und mindestens einer korrespondierenden Einrasteinrichtung umfasst. Auf diese Weise lassen sich die Verbindungsmittel leicht über die Rastaufnahme- und Einrasteinrichtungen zusammenfügen und eine Sicherung gegen unbeabsichtigtes Lösen durch eine Rastung realisieren. Ein weiterer Vorteil der Erfindung ist, dass das Zusammenbringen der Verbindungsmittel werkzeuglos ausgeführt werden kann, was die Montage des Kunststoffbehälters an der Halteeinrichtung vereinfacht. Durch das Zusammenbringen der Verbindungsmittel mittels im Wesentlichen formschlüssigen Verbindens der Verbindungsmittel lässt sich so eine äußerst einfache und dennoch sichere Montage des Kunststoffbehälters an der Halteeinrichtung realisieren, die bei Bedarf einfach gelöst werden kann.

Das Anbringen des Verbindungsmittels an dem Kunststoffbehälter umfasst das Anbringen des Verbindungsmittels an der selbsttragenden Struktur des Kunststoffbehälters. Die selbstragende Struktur an dem Kunststoffbehälter ist über entsprechende Materialverstärkungen und/oder zusätzlich eingebundene Verstärkungen stabil ausgebildet. Um nun eine sichere Montage zu gewährleisten, wird das Verbindungsmittel an der selbsttragenden Struktur angebracht, die eine ausreichende Festigkeit zur Verbindung mit den Verbindungsmitteln aufweist.

Der Schritt Anbringen von je einem Verbindungsmittel an der Halteeinrichtung und an dem Kunststoffbehälter kann insbesondere das Anbringen von mehreren Verbindungsmitteln umfassen. Dabei entsprechen sich bevorzugt die Anzahl der an der Halteeinrichtung und der an dem Kunststoffbehälter angebrachten Verbindungsmittel. Jedoch kann sich die Anzahl der Verbindungsmittel, die an der Halteeinrichtung und/oder dem Kunststoffbehälter angeordnet ist, auch unterscheiden.

Die Erfindung schließt weiter die technische Lehre ein, dass bei einer Montagevorrichtung zur sicheren Montage von Kunststoffbehältern mit selbsttragender Struktur, insbesondere von Kunststoffbehältern für flüssige Medien und Chemikalien wie Flüssigbrennstoffe, zur (Leitungs-)Anbindung an stationäre oder mobile Halteeinrichtungen, vorgesehen ist, dass die Montagevorrichtung Mittel zum Durchführen des erfindungsgemäßen Verfahrens aufweist. Die Mittel zur Durchführung des erfindungsgemäßen Verfahrens stellen dabei Merkmale, Ausformungen, Komponenten und dergleichen dar, die zur Ausführung des Verfahrens erforderlich sind, zum Beispiel entsprechende Verbindungsmittel.

Eine Ausführungsform der Montagevorrichtung sieht deshalb vor, dass die Montagevorrichtung mindestens zwei zusammenwirkende, komplementäre Verbindungsmittel aufweist, die in Wirkverbindung miteinander bringbar sind. Dabei ist ein erstes Verbindungsmittel mit ersten Anbringmitteln zum Anbringen an eine tragende Struktur des Kunststoffbehälters ausgebildet. Die Anbringmittel können beliebig ausgebildet sein und an dem Kunststoffbehälter an einem Teil seiner tragenden Struktur angeordnet werden. Entsprechend können die Anbringmittel als Schraubverbindung oder als Steckverbindung ausgebildet sein, welche zum Teil in die tragende Struktur eingreifen, was aufgrund der erhöhten Festigkeit des korrespondierenden Teils der tragenden Struktur problemlos realisierbar ist.

Ein zweites Verbindungsmittel ist mit zweiten Anbringmitteln zum Anbringen an eine Halteeinrichtung ausgebildet ist. Die ersten und zweiten Anbringmittel können gleich ausgebildet sein. Da die zweiten Anbringmittel an einer Halteeinrichtung wie beispielsweise einem Rahmen eines Lkws angebracht werden, können diese angeschweißt oder anders stoffschlüssig mit der Halteeinrichtung verbunden werden. Auch die ersten Anbringmittel können stoffschlüssig, beispielsweise über eine Schweißverbindung, an der tragenden Struktur des Kunststoffbehälters angebracht werden. In diesem Falle sind die Verbindungsmittel jedoch mit einem in den Kunststoffbehälter eingebetteten Profil, welches bevorzugt aus einem von Kunststoff verschiedenen Material ausgebildet ist, über ein erstes Anbringmittel befestigt.

Über die an der Halteeinrichtung bzw. an der tragenden Struktur des Kunststoffbehälters angebrachten Verbindungsmittel lassen sich auf einfache Weise der Kunststoffbehälter und die Halteeinrichtung sicher montieren. Die Verbindungsmittel weisen für eine formschlüssige Verbindung korrespondierende Formschlussmittel auf, um die Verbindungsmittel formschlüssig miteinander zu verbinden. Die Formschlussmittel können beliebig ausgebildet sein, beispielsweise als Steckverbindung oder als Rastmittel, mit welchen eine einrastende Formschlussverbindung realisierbar ist.

Eine bevorzugte Ausführungsform sieht deshalb vor, dass die Formschlussmittel als Rastaufnahmeeinrichtung und/oder Einrasteinrichtung ausgebildet sind. Hierdurch lassen sich die Verbindungsmittel auf einfache, lösbare Weise miteinander verrasten und sind zugleich gegen ungewolltes Lösen gesichert.

Jedes Verbindungsmittel kann mehrere Rastaufnahmeeinrichtungen und/oder Einrasteinrichtungen aufweisen. Dabei kann ein Verbindungsmittel sowohl Rastaufnahmeeinrichtungen als auch Einrasteinrichtungen aufweisen. Das korrespondierende Verbindungsmittel weist dann komplementär dazu ebenfalls sowohl Einrasteinrichtungen und Rastaufnahmeeinrichtung auf. Die Verbindungsmittel sind komplementär zueinander ausgebildet. Auch mehrere Verbindungsmittel können vorgesehen sein, wobei jeweils komplementäre Verbindungsmittel miteinander in Wirkverbindung stehen.

Wie bereits ausgeführt, sind die Verbindungsmittel mit der Halteeinrichtung und/oder der tragenden Struktur des Kunststofftanks über Anbringmittel verbunden. Entsprechend dem Verbindungsmittel, insbesondere seiner Form, seinem Gewicht und Material, sind die Anbringmittel ausgebildet. Dabei kann ein Verbindungsmittel mehrere Anbringmittel auch unterschiedlicher Art aufweisen.

Die Anbringmittel können in Abhängigkeit zu dem Verbindungsmittel als Schraubverbindungsmittel, Schweißverbindungsmittel, Nietverbindungsmittel, Steckverbindungsmittel und dergleichen ausgebildet sein. Wichtig ist insbesondere die Werkstoffpaarung zwischen der tragenden Struktur des Kunststoffbehälters und dem Verbindungsmittel.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: in einer perspektivischen Ansicht einen über eine Montagevorrichtung mit einer Halteeinrichtung verbundenen Kunststoffbehälter,
- Fig. 2: eine Ansicht nach Fig. 1, bei der eine tragende Struktur des Kunststoffbehälters verdeutlicht dargestellt ist,
- Fig. 3: in seitlicher Ansicht einen Querschnitt durch einen Kunststoffbehälter, der über eine Montagevorrichtung mit einer Halteeinrichtung verbunden ist,
- Fig. 4: eine perspektivische Ansicht einer Ausführungsform der an der Halteeinrichtung angeordneten Verbindungsmittel,
- Fig. 5: in seitlicher Ansicht einen Querschnitt durch einen Ausschnitt der Montagevorrichtung und deren Verbindung an der Halteeinrichtung,
- Fig. 6: schematisch in einer perspektivischen Ansicht die Anordnung eines ersten Verbindungsmittels an der tragenden Struktur des Kunststoffbehälters und
- Fig. 7: schematisch den Verbindungsvorgang der beiden Verbindungsmittel.

In den einzelnen Figuren sind gleiche oder ähnliche Bauteile mit jeweils gleichen Bezugszeichen versehen.

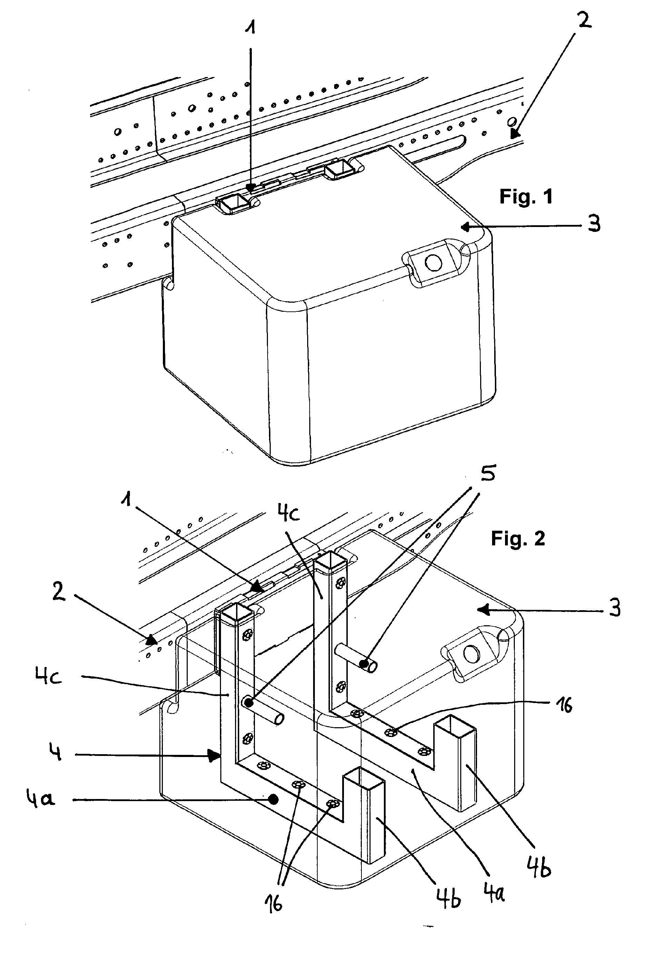

Fig. 1 zeigt in einer Schrägansicht einen über eine Montagevorrichtung 1 mit einer Halteeinrichtung 2 verbundenen Kunststoffbehälter 3. Die Halteeinrichtung 2 ist in diesem Beispiel der Rahmen eines (nicht weiter gezeigten) LKW. Der Kunststoffbehälter 3 ist vorliegend als Tank für Flüssigkraftstoff ausgebildet. Über die Montagevorrichtung 1 lassen sich der Kunststoffbehälter 3 und die Halteeinrichtung 2 sicher, insbesondere crashsicher, miteinander lösbar verbinden.

Fig. 2 zeigt die Ansicht von Fig. 1, wobei der Kunststoffbehälter 3 transparent dargestellt ist, so dass eine tragende Struktur 4 des Kunststoffbehälters 3 verdeutlicht dargestellt ist.

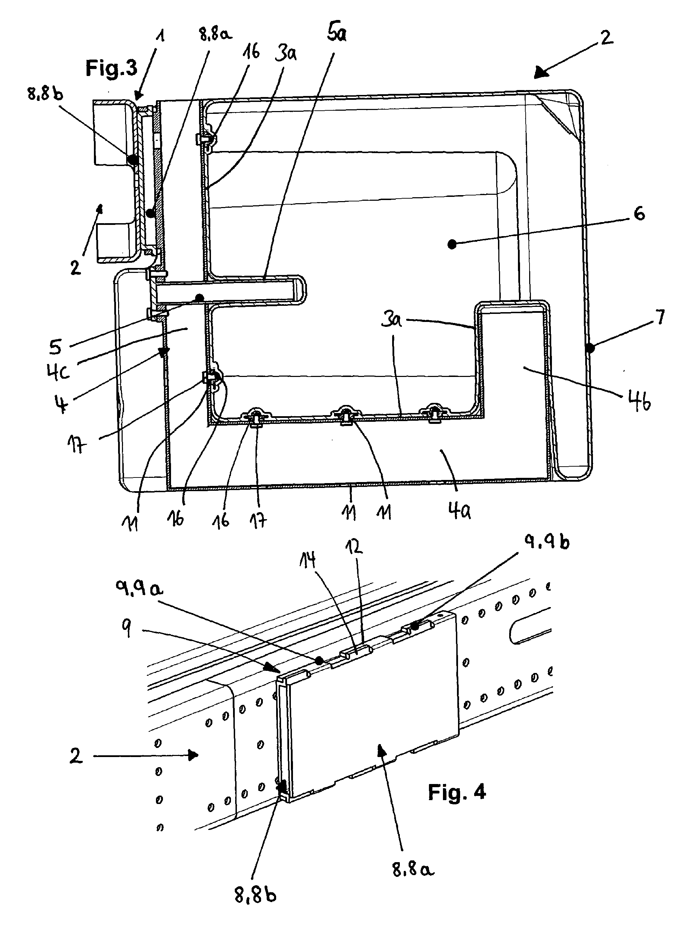

Die tragende Struktur 4 umfasst zwei Trägerprofile 4a, welche in den Kunststoffbehälter 3 eingebettet sind. Die Trägerprofile 4a sind etwa U-förmig ausgebildet, wobei je ein Schenkel der U-Form (z.B. der vordere Schenkel 4b) kürzer ist als der andere (vorliegend der dem LKW-Rahmen 2 zugewandte Schenkel 4c). Die kürzeren Schenkel 4b bilden je eine aufwärts gerichtete Stütze. Von jedem der längeren Schenkel 4c der U-Form ragt etwa mittig ein stiftartiger Vorsprung 5 oder Stehbolzen vor, der in je eine in einer Kunststoffwandung 7 des Behälters 3 ausgebildete Ausnehmung 5a eingreift (siehe Fig. 3).

Zur Aufnahme der Trägerprofile 4a sind - wie Fig. 3 zeigt - in den Behälter zwei Einbuchtungen 3a eingebracht, welche die Träger 4a im Wesentlichen formschlüssig aufnehmen. Durch die aufwärts gerichteten Einbuchtungen 3a oder Taschen wird der eingehängte bzw. aufgesetzte Behälter 3 bereits in seiner Lage arretiert.

In der tragenden Struktur 4 sind ferner Durchgangsbohrungen 11 eingebracht, um das Trägerprofil 4a mit dem Kunststoffbehälter 3 fest verbinden zu können. Hierzu werden Schrauben 17 durch die Durchgangsbohrungen 11 hindurch in Schraubeinsätze 16 eingebracht (siehe Fig. 3). Die Schraubeinsätze 16 (metal inserts) sind als Hutmuttern oder als Scheibenkörper mit Innengewinde ausgebildet und in das Material der Kunststoffwandung 7 des Behälters 3 eingebettet. Wichtig dabei ist eine zuverlässige Abdichtung in der Wandung 7 gegenüber dem Innenraum 6 des Kunststoffbehälters 3.

Durch diese Maßnahmen wird eine stets stabile und dauerhaft feste Verbindung zwischen dem Behälter 3 und der tragenden Struktur 4 erreicht, die mithin als Konsoleneinheit in dem Kunststoffbehälter 3 integriert ist. Die Konsoleneinheit 4 stützt den aufgesetzten Behälter 3 nicht nur ab. Dieser wird zugleich von der tragenden Struktur 4 in sich stabilisiert. Darüber hinaus bilden die taschenförmigen Einbuchtungen 3a innerhalb des Behälters 3 Schwallwände oder Schotten, die Flüssigkeitsbewegungen im Behälter 3 wirksam begrenzen.

Die Montagevorrichtung 1 ist an der Tragstruktur 4 angeordnet.

Fig. 3 zeigt in seitlicher Ansicht einen Querschnitt durch den Kunststoffbehälter 3, der über die Montagevorrichtung 1 mit der Halteeinrichtung 2 verbunden ist. Der Behälter 3 weist einen Innenraum 6, die Kunststoffwandung 7 und die integrierte bzw. in den Behälter 3 eingebettete tragende Struktur 4 auf. Im Vergleich zu den Abmessungen des Behälters 3 ist die Kunststoffwandung 7 relativ dünnwandig ausgebildet. Um den Kunststoffbehälter 3 selbsttragend auszuformen, ist die tragende Struktur 4 in ihn integriert.

Zur einfachen und raschen Befestigung des Kunststoffbehälters 3 an der Halteeinrichtung 2 ist die Montagevorrichtung 1 mit Verbindungsmitteln 8 versehen. Ein erstes Verbindungsmittel 8a, beispielsweise in Form einer Rastplatte mit Formschlussmitteln 9a, ist dabei an dem Kunststoffbehälter 3, nämlich an dessen tragender Struktur 4 angeordnet, und ein zweites Verbindungsmittel 8b, beispielsweise in Form einer Aufnahmeplatte mit seitlichen Formschlussmitteln 9b, ist an der Halteeinrichtung 2 angeordnet. Die beiden Verbindungsmittel 8a und 8b sind ähnlich einer Bajonett- oder Rastverbindung komplementär zueinander ausgebildet, so dass sie im Zusammenwirken eine sichere Rast- und/oder Klemm-Verbindung bilden. In Fig. 4 sind die Verbindungsmittel 8a und 8b größer dargestellt.

Fig. 4 zeigt eine perspektivische Ansicht einer Ausführungsform der an der Halteeinrichtung 2 angeordneten Verbindungsmittel 8a und 8b. Diese weisen vorliegend korrespondierende Formschlussmittel 9 auf, wobei erste Formschlussmittel 9a des ersten Verbindungsmittels 8a komplementär zu zweiten Formschlussmitteln 9b des zweiten Verbindungsmittels 8b ausgebildet sind, so dass die Verbindungsmittel 8a, 8b kraft- und/oder formschlüssig miteinander in Verbindung treten können. Die Platten 8a, 8b lassen sich mithin auf einfache Weise schiebend ineinander verrasten, was die Montage des Behälters 3 am LKW-Rahmen deutlich vereinfacht und damit beschleunigt.

Die Formschlussmittel 9 sind als Rastaufnahme- und Einrasteinrichtungen 12, 14 ausgebildet, die ein Einrasten der Verbindungsmittel 8 miteinander bewirken. Die Rastaufnahmeeinrichtungen 12 sind vorzugsweise allgemein hakenförmige Laschen, während die Einrasteinrichtungen 14 vorzugsweise nach oben und unten abstehende Vorsprünge bilden. Die Laschen 12 und die Vorsprünge 14 sind komplementär ausgebildet, so dass die Verbindungsmittel 8 über die Formschlussmittel 9 miteinander kraft- und/oder formschlüssig ineinander verrastbar sind. Jedes Verbindungsmittel 8 weist vorliegend drei Formschlussmittel 9 auf, doch können Formschlussmittel 9 in anderer Anzahl vorgesehen werden. Ebenfalls lassen sich mehrere Verbindungsmittel 8 vorsehen.

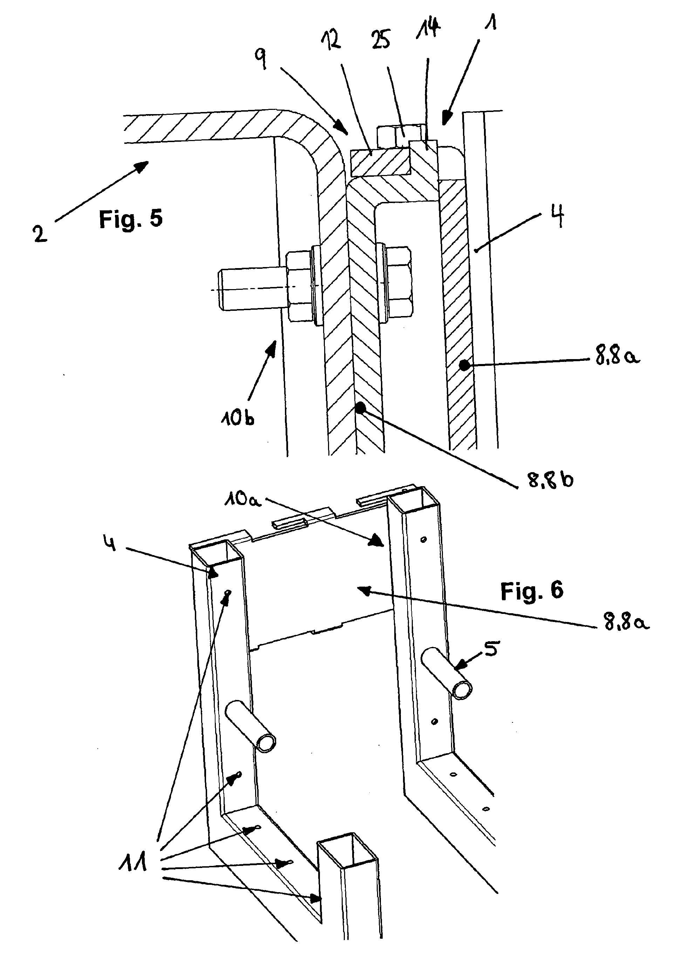

Fig. 5 zeigt in seitlicher Ansicht einen Querschnitt durch einen Ausschnitt der Montagevorrichtung 1 und dessen Verbindung mit der Halteeinrichtung 2. Die Montagevorrichtung 1 umfasst in diesem Ausschnitt die zwei Verbindungsmittel 8a, 8b, die formschlüssig als Rastverbindung zusammenwirken. Die Verbindungsmittel 8 sind über zweite Anbringmittel 10b, z.B. eine Schraubverbindung, an der Halteeinrichtung 2 bzw. über erste Anbringmittel 10a, beispielsweise (nicht näher gezeigte) Schrauben an der tragenden Struktur 4 des Kunststoffbehälters 3 angebracht. Die Anbringmittel 10a,b können beliebig ausgebildet sein, solange sie eine ortsfeste und sichere Anbringung der Verbindungsmittel 8a, 8b an der Halteeinrichtung 2 bzw. an der tragenden Struktur gewährleisten.

Das erste Verbindungsmittel 8a ist über die ersten Anbringmittel 10a (hier nicht dargestellt) an der tragenden Struktur 4 angebracht, während das zweite Verbindungsmittel 8b über die zweiten Anbringmittel 10b mit der Halteeinrichtung 2 verbunden ist. Das zweite Anbringmittel 10b ist in diesem Beispiel eine Schraubverbindung, die mit einem Schraubenschaft das zweite Verbindungsmittel 8b und eine Wandung der Halteeinrichtung 2 durchdringt und mittels Schraubenkopf und Schraubenmutter fixiert ist.

Fig. 6 zeigt in schematischer Schrägansicht die Anordnung des ersten Verbindungsmittels 8a an der tragenden Struktur 4 des Kunststoffbehälters 3. Das erste Verbindungsmittel 8a weist hierbei die ersten Anbringmittel 10a auf, mit welchen das erste Verbindungsmittel 8a an der tragenden Struktur 4 festgelegt ist. Die ersten Anbringmittel 10a sind vorliegend als Verschweißung ausgebildet, können jedoch nach jeder beliebigen Verbindungsart ausgebildet sein, die eine sichere Anbringung des Verbindungsmittels 8, 8a an der tragenden Struktur 4 gewährleistet.

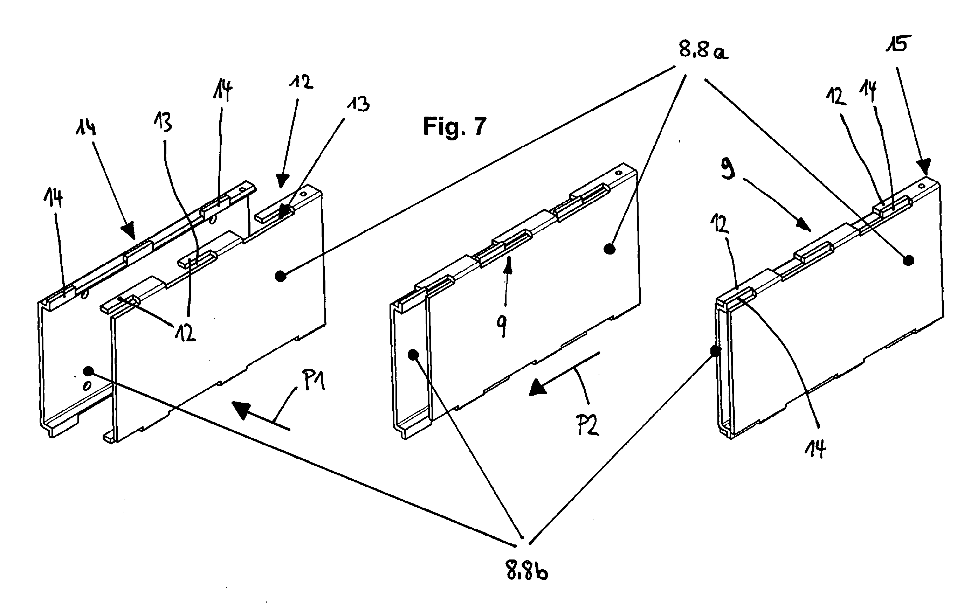

Fig. 7 zeigt schematisch den Verbindungsvorgang der beiden Verbindungsmittel 8a, 8b. Die Verbindung ist erfolgt, wenn das mit der (hier nicht gezeigten) tragenden Struktur 4 verbundene Verbindungsmittel 8a auf das an dem LKW-Rahmen 2 angeschraubte Verbindungsmittel 8b aufgesetzt (Pfeilrichtung P1) und ein Stück weit seitwärts bewegt worden ist (Pfeilrichtung P2), so dass die Rastaufnahmeeinrichtungen 12 des ersten Verbindungsmittels 8a hinter die Einrasteinrichtungen 14 des zweiten Verbindungsmittels 8b greifen und die Einrasteinrichtungen 14 in den Ausnehmungen 13 der Rastaufnahmeeinrichtungen 12 zum liegen kommen. Zur besseren Darstellbarkeit sind die Halteeinrichtung 2 und die tragende Struktur 4 sowie der Kunststoffbehälter 3 hier nicht gezeichnet.

Das erfindungsgemäße Montageverfahren ist damit denkbar einfach:

In einem ersten Schritt werden die beiden Verbindungsmittel 8a, 8b versetzt zueinander angenähert, wobei Pfeile P1, P2 ihre Bewegungsrichtungen andeuten. Das erste Verbindungsmittel 8a hat als erste Formschlussmittel 9a die allgemein hakenförmigen Lasche n 12, wobei jede Lasche 12 eine sich in eine erste Richtung erstreckende Ausnehmung 13 aufweist und etwa L-förmig ausgebildet sein kann. Das zweite Verbindungsmittel 8b weist als zweite Formschlussmittel 9b die nach oben und unten abstehenden Vorsprünge 14 auf, deren Außenkontur der Innenkontur der Ausnehmungen 13 entspricht, so dass in jeder dieser Ausnehmungen 13 ein Vorsprung 14 reib- und/oder formschlüssig aufnehmbar ist. Die Formschlussmittel 9 sind damit ähnlich wie bei einem Bajonett-Verschluss komplementär ausgebildet und bilden bei Zusammenwirken einen Formschluss.

Das versetzte Annähern der beiden Verbindungsmittel 8 erfolgt derart, dass die Verbindungsmittel 8 in Erstreckungsrichtung der Ausnehmung versetzt zueinander angenähert werden, so dass bei sonst gleicher Ausrichtung der Vorsprung 14 vor der Ausnehmung 13 angeordnet ist, wie dies in dem zweiten Schritt des Verbindungsvorgangs dargestellt ist (Fig. 7 Mitte). Die Verbindungsmittel 8 sind bis auf den Versatz in Deckung und grenzen aneinander an. In einem dritten Schritt werden nun die Verbindungsmittel8 in Erstreckungsrichtung der Ausnehmung 13 verschoben, so dass die Verbindungsmittel bündig zueinander angrenzen und der Vorsprung 14 in der Ausnehmung 14 angeordnet ist (Fig. 7 rechts).

Man erkennt, dass die Vorsprünge 14 der Aufnahmeplatte 8b bevorzugt vertikal verlaufen und verrastet von den waagrecht abgewinkelten Vorsprüngen 12 der Rastplatte 8b hintergriffen werden (siehe Fig. 7). Die entgegengesetzte Rast-Anordnung ist ebenfalls möglich. Die eingehängte Konsoleneinheit 4, 8 belastet die Verbindung schon durch ihr Eigengewicht; das hinzukommende Gewicht des Behälters 3 stabilisiert sie zusätzlich.

Zur weiteren Sicherung weist in der dargestellten Ausführungsform eine der Laschen 13 ein Durchgangsloch 15 auf, durch welches eine Schraubenverbindung 25 (hier nicht dargestellt, siehe Fig. 5) in die Verbindungsmittel 8 eingreifen und sie zueinander zusätzlich festlegen kann.

Die Erfindung ist nicht auf eine der vorbeschriebenen Ausführungsformen beschränkt, sondern in vielfältiger Weise abwandelbar. Insbesondere können auch Metallbehälter, z.B. Tanks aus Stahl, Aluminium u.dgl. in der angegebenen Art oder vergleichbar ausgebildet und montiert werden, ohne dass der Rahmen der Erfindung verlassen würde.

Man erkennt, dass die Erfindung eine Montagevorrichtung 1 und ein Verfahren zur sicheren Montage von Behältern 3 mit selbsttragender Struktur 4 betrifft, insbesondere von Kunststoffbehältern 3 für flüssige Medien und Chemikalien wie Flüssigbrennstoffe, zur Anbindung an stationäre oder mobile Halteeinrichtungen 2. Das Verfahren umfasst die Schritte: Anbringen von Leitungen an einer Halteeinrichtung 2, Anordnen des Behälters 3 an der Halteeinrichtung 2 und Anbinden des Behälters 3 an die Leitungen, wobei der Schritt Anordnen des Behälters 3 an der Halteeinrichtung 2 das Anbringen von je einem Verbindungsmittel 8 an der Halteeinrichtung 2 und an dem Behälter 3 sowie ein Zusammenbringen der Verbindungsmittel 8 umfasst. Das Anbringen des Verbindungsmittels 8 an der Halteeinrichtung 2 wird bevorzugt vor dem Schritt Anbringen von Leitungen ausgeführt. Die Montagevorrichtung 1 weist Mittel zur Durchführung des Verfahrens auf.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Montagevorrichtung
- 2: Halteeinrichtung
- 3: Kunststoffbehälter
- 3: Ausbuchtung
- 4: tragende Struktur
- 4a: Trägerprofil
- 4b: Schenkel
- 4c: Schenkel
- 5: stiftartiger Vorsprung
- 5: Ausnehmung
- 6: Innenraum
- 7: Kunststoffwandung
- 8: Verbindungsmittel
- 8a: erstes Verbindungsmittel
- 8b: zweites Verbindungsmittel

- 9: Formschlussmittel
- 9a: erstes Formschlussmittel
- 9b: zweites Formschlussmittel
- 10: Anbringmittel
- 10a: erstes Anbringmittel
- 10b: zweites Anbringmittel
- 11: Durchgangsbohrung
- 12: Rastaufnahmeeinrichtung
- 13: Ausnehmung
- 14: Einrasteinrichtung
- 15: Durchgangsloch
- 16: Schraubeinsatz
- 17: Schrauben
- 25: Schraubenverbindung

## Patentansprüche

1. Verfahren zur sicheren Montage von Kunststoffbehältern (3) mit selbsttragender Struktur (4), insbesondere von Kunststoffbehältern (3) für flüssige Medien und Chemikalien wie Flüssigbrennstoffe, zur Anbindung an stationäre oder mobile Halteeinrichtungen (2), umfassend die Schritte: Anbringen von Leitungen an der Halteeinrichtung (2), Anordnen des Kunststoffbehälters (3) an der Halteeinrichtung (2) und Anbinden des Kunststoffbehälters (3) an die Leitungen, **dadurch gekennzeichnet, dass** der Schritt Anordnen des Kunststoffbehälters (3) an der Halteeinrichtung (2) das Anbringen von je einem Verbindungsmittel (8) an der Halteeinrichtung (2) und dem Kunststoffbehälter (3) und ein Zusammenbringen der Verbindungsmittel (8) umfasst.

2. Verfahren nach Anspruch 1, **dadurch gekennzeichnet, dass** zwischen dem Schritt Anbringen des Verbindungsmittels (8) an der Halteeinrichtung (2) und dem Schritt Zusammenbringen der Verbindungsmittel (8) weitere Montageschritte ausgeführt werden.

3. Verfahren nach Anspruch 1 oder 2, **dadurch gekennzeichnet, dass** das Anbringen von Verbindungsmitteln (8) das Anbringen von im Wesentlichen formschlüssig zusammenwirkenden Verbindungsmitteln (8) umfasst.

4. Verfahren nach einem der Ansprüche 1 bis 3, **dadurch gekennzeichnet, dass** das Anbringen von im Wesentlichen formschlüssig zusammenwirkenden Verbindungsmitteln (8) das Anbringen von mindestens einer Rastaufnahmeeinrichtung und mindestens einer Einrasteinrichtung umfasst.

5. Verfahren nach einem der Ansprüche 1 bis 4, **dadurch gekennzeichnet, dass** das Zusammenbringen der Verbindungsmittel (8) werkzeuglos ausgeführt wird.

6. Verfahren nach einem der Ansprüche 1 bis 5, **dadurch gekennzeichnet, dass** das Zusammenbringen der Verbindungsmittel (8) das im Wesentlichen formschlüssige Verbinden der Verbindungsmittel (8) umfasst.

7. Verfahren nach einem der Ansprüche 1 bis 6, **dadurch gekennzeichnet, dass** das Anbringen des Verbindungsmittels (8) an dem Kunststoffbehälter (3) das Anbringen des Verbindungsmittels (8) an der tragenden Struktur (4) des Kunststoffbehälters (3) umfasst.

8. Verfahren nach einem der Ansprüche 1 bis 7, **dadurch gekennzeichnet, dass** der Schritt Anbringen von je einem Verbindungsmittel (8) an der Halteeinrichtung (2) und an dem Kunststoffbehälter (3) das Anbringen von mehreren Verbindungsmitteln (8) umfasst.

9. Montagevorrichtung (1) zur sicheren Montage von Kunststoffbehältern (3) mit selbsttragender Struktur (4), insbesondere von Kunststoffbehältern (3) für flüssige Medien und Chemikalien wie Flüssigbrennstoffe, zur Anbindung an stationäre oder mobile Halteeinrichtungen (2), **dadurch gekennzeichnet, dass** die Montagevorrichtung (1) Mittel zur Durchführung des Verfahrens nach einem der Ansprüche 1 bis 8 aufweist.

10. Montagevorrichtung (1) nach Anspruch 9, **dadurch gekennzeichnet, dass** die Montagevorrichtung (1) mindestens zwei zusammenwirkende, komplementäre Verbindungsmittel (8) aufweist, die in Wirkverbindung miteinander bringbar sind.

11. Montagevorrichtung (1) nach Anspruch 9 oder 10, **dadurch gekennzeichnet, dass** ein erstes Verbindungsmittel (8a) mit ersten Anbringmitteln (10a) zum Anbringen an die tragende Struktur (4) des Kunststoffbehälters (3) ausgebildet ist.

12. Montagevorrichtung (1) nach einem der Ansprüche 9 bis 11, **dadurch gekennzeichnet, dass** ein zweites Verbindungsmittel (8b) mit zweiten Anbringmitteln (10b) zum Anbringen an die Halteeinrichtung (2) ausgebildet ist.

13. Montagevorrichtung (1) nach einem der vorherigen Ansprüche 9 bis 12, **dadurch gekennzeichnet, dass** die Verbindungsmittel (8) korrespondierende Formschlussmittel (9) aufweisen, um die Verbindungsmittel (8) formschlüssig miteinander zu verbinden.

14. Montagevorrichtung (1) nach einem der Ansprüche 9 bis 13, **dadurch gekennzeichnet, dass** die Formschlussmittel (9) als Rastaufnahmeeinrichtung und/oder Einrasteinrichtung ausgebildet sind.

15. Montagevorrichtung (1) nach einem der Ansprüche 9 bis 14, **dadurch gekennzeichnet, dass** jedes Verbindungsmittel (8) mehrere Rastaufnahmeeinrichtungen und/oder Einrasteinrichtungen aufweist.

16. Montagevorrichtung (1) nach einem der Ansprüche 9 bis 15, **dadurch gekennzeichnet, dass** mehrere Verbindungsmittel (8) vorgesehen sind.

17. Montagevorrichtung (1) nach einem der Ansprüche 9 bis 16, **dadurch gekennzeichnet, dass** die Anbringmittel (10) als Schraubverbindungsmittel, Schweißverbindungsmittel, Nietverbindungsmittel, Steckverbindungsmittel und dergleichen ausgebildet sind.
